# EUROPÄISCHE PATENTSCHRIFT

(11) **EP 2 943 387 B1**
(45) Veröffentlichungstag und Bekanntmachung des Hinweises auf die Patenterteilung: **01.03.2017**
(21) Anmeldenummer: 14712185.9
(22) Anmeldetag: 13.01.2014
(51) Int. Cl.: B61D 23/02, B60R 3/02

(54) **EINSTIEGSHILFE FÜR EIN SCHIENENFAHRZEUG ODER EIN KRAFTFAHRZEUG MIT DREIPUNKTLAGERUNG**
ENTRY AID WITH THREE-POINT BEARING FOR A RAIL VEHICLE OR A MOTOR VEHICLE
MARCHEPIED À TROIS POINTS DE SUPPORT DESTINÉ À UN VÉHICULE FERROVIAIRE OU À UN VÉHICULE AUTOMOBILE

(30) Priorität: 14.01.2013 AT 500152013
(43) Veröffentlichungstag der Anmeldung: 18.11.2015
(73) Patentinhaber: Knorr-Bremse Gesellschaft mit beschränkter Haftung, 2340 Mödling (AT)
(72) Erfinder: HIRTENLEHNER, Andreas, 3362 Öhling (AT); WILFLINGER, Johann, 4030 Linz (AT)
(74) Vertreter: Burger, Hannes
(86) Internationale Anmeldenummer: PCT/AT2014/050007
(87) Internationale Veröffentlichungsnummer: WO 2014/107756

(56) Entgegenhaltungen:
- EP-A1- 0 578 574
- DE-A1- 19 928 571
- DE-U1-202008 004 517
- DE-U1-202008 004 592
- DE-U1-202009 005 045
- US-A- 3 341 223

## Beschreibung

Die Erfindung betrifft eine Einstiegshilfe für ein Schienenfahrzeug oder ein Kraftfahrzeug, umfassend ein Trittbrett, welches auf Wälzkörpern und/oder Gleitflächen verschiebbar gelagert ist, und einen mit dem Trittbrett gekoppelten Antrieb, welcher zum Aus- und Einfahren des Trittbretts eingerichtet ist.

Eine Einstiegshilfe mit den im Oberbegriff von Anspruch 1 definierten Merkmalen ist aus der EP-A1-0 578 574 bekannt. Solche Einstiegshilfen werden bei (öffentlichen) Personenbeförderungsfahrzeugen eingesetzt, um den Zustieg in das und den Ausstieg aus dem Fahrzeug zu erleichtern beziehungsweise um eine Gefährdung von Personen zu vermeiden. Beispielsweise dient das Trittbrett eines Schienenfahrzeugs zur Überbrückung des Spalts zwischen dem Schienenfahrzeug und einem Bahnsteig, wenn das Schienenfahrzeug in einem Bahnhof hält. Solcherart wird verhindert, dass Passagiere in den betreffenden Spalt hineinrutschen und sich verletzen. Analog kann das Trittbrett bei Bussen dazu dienen, den Spalt zwischen Fahrzeug und Bordsteinkante abzudecken. Das Trittbrett kann generell aber beispielsweise auch dazu dienen, den Höhenunterschied zwischen dem Innenraum des Fahrzeugs und dem Bahn- beziehungsweise Gehsteig zu überbrücken, um den Zu- und Ausstieg mit Rollstühlen und Kinderwagen zu erleichtern. Zu diesem Zweck können einige Busse auch zur Seite geneigt werden, wodurch das Trittbrett ebenfalls schräg nach unten gestellt wird.

In der Regel wird das Trittbrett, das mit Hilfe eines Antriebs zwischen einer Ruhestellung und einer Gebrauchsstellung bewegt werden kann, an zwei parallel zueinander angeordneten Schienen geführt. Üblicherweise sind je Schiene zwei in Schieberichtung voneinander beabstandete Rollen vorgesehen, sodass ein Kippen des Trittbretts verhindert wird.

Dieses System weist einige Nachteile auf. Beispielsweise kann sich das Trittbrett leicht verkanten, insbesondere wenn es unsymmetrisch belastet wird. Weiterhin können die Wälzkörper/Gleitflächen beziehungsweise die Lauffläche der Schiene bei übermäßiger Belastung beschädigt werden.

Eine Aufgabe der Erfindung ist es daher, eine verbesserte Einstiegshilfe für ein Schienenfahrzeug oder ein Kraftfahrzeug anzugeben. Insbesondere sollen die oben erwähnten Nachteile vermieden oder wenigstens gemildert werden.

Die Aufgabe der Erfindung wird mit einer Einstiegshilfe der eingangs genannten Art gelöst, bei dem die Wälzkörper und/oder Gleitflächen
a) in genau drei voneinander beabstandeten und im Dreieck angeordneten Tragbereichen positioniert sind oder
b) auf mehreren Wippen angeordnet sind und Lagerpunkte der Wippen in genau drei voneinander beabstandeten und im Dreieck angeordneten Tragbereichen positioniert sind.

Dadurch ist die Lagerung des Trittbretts statisch im Wesentlichen bestimmt. Anders als bei mehr Tragbereichen, wie sie sich beispielsweise durch die vier voneinander beabstandeten Rollen im Stand der Technik ergeben, sind die Kräfte auf die Tragbereiche daher besser vorhersehbar. Ein ungewolltes Abheben eines Tragbereichs von seiner Auflage- oder Rollfläche, welches nach dem Stand der Technik zu einer ungeplanten übermäßigen Belastung der übrigen Tragbereiche führt, ist bei der vorgestellten Vorgehensweise ausgeschlossen. Weiterhin ist dadurch gewährleistet, dass die Tragbereiche lediglich einer vorteilhaften schwellenden Belastung, nicht jedoch einer unvorteilhaften Wechselbelastung ausgesetzt sind, so wie das beispielsweise bei einem Trittbrett mit vier Rollen möglich ist. Dadurch dass ein Abheben eines Tragbereichs verhindert wird, werden auch Schäden vermieden, die durch ein Aufschlagen eines Tragbereichs auf seiner Auflage- oder Rollfläche resultieren können. Insbesondere gehärtete Oberflächen können andernfalls schon bei an sich relativ geringer Belastung respektive schon nach nur kurzer Zeit zerstört werden.

Darüber hinaus ist die Gefahr des Verkantens der Führung des Trittbretts deutlich reduziert. Daher ist auch die zum sicheren Ein- und Ausfahren des Trittbretts nötige Kraft besser planbar. Außerplanmäßige Aufenthalte, welche einem verklemmten Trittbrett geschuldet sind, sowie Arbeiten zu deren Instandsetzung können so vermieden werden.

"Voneinander beabstandete Tragbereiche" mit jeweils mehreren Wälzkörpern/Gleitflächen sind im Rahmen der Erfindung dadurch charakterisiert, dass die Wälzkörper/Gleitflächen eines Tragbereichs eine klar erkennbare Gruppe beziehungsweise ein klar erkennbares "Cluster" bilden. Das heißt der Abstand der einzelnen Wälzkörper/Gleitflächen eines Tragbereichs zueinander ist klein gegenüber dem Abstand der Wälzkörper/Gleitflächen zweier unterschiedlicher Tragbereiche.

Die voneinander beabstandeten Tragbereiche respektive Cluster können auch auf (momentenlose) Krafteinleitungspunkte mehrerer Wälzkörper/Gleitflächen bezogen sein. Beispielsweise können zwei Wälzkörper/Gleitflächen über eine Wippe verbunden sein, um einerseits eine Belastung auf mehrere Wälzkörper/Gleitflächen aufzuteilen, andererseits aber auch um zu gewährleisten, dass die Wälzkörper/Gleitflächen in jedem Fall tragen. Über das Drehlager der Wippe kann im Wesentlichen nur eine Lagerkraft, jedoch kein Drehmoment übertragen werden. Solche Krafteinleitungs- oder Lagerpunkte können ebenfalls im Dreieck angeordnet sein respektive auch Cluster bilden. Dabei ist die Lagerung des Trittbretts selbst dann noch statisch im Wesentlichen bestimmt, wenn die Wälzkörper/Gleitflächen und/oder Gleitflächen selbst zwar keine Cluster bilden, jedoch die genannten Krafteinleitungs- oder Lagerpunkte diese Eigenschaft aufweisen.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Abstand zweier Tragbereiche voneinander wenigstens fünfmal so groß ist wie deren maximale Ausdehnung. Dadurch ist die Lagerung des Trittbretts im Wesentlichen statisch bestimmt, da die Tragbereiche klein gegenüber deren Abstand sind. Beispielsweise kann der Abstand zweier Tragbereiche auf deren Mittenabstand beziehungsweise auf den Abstand deren Flächenschwerpunkte sowie auf deren (kleinsten) Randabstand bezogen sein.

Vorteilhaft ist es, wenn pro Tragbereich genau ein Wälzkörper oder eine Gleitfläche oder ein Lagerpunkt vorgesehen ist. Das heißt, die Anzahl der Wälzkörper/Gleitflächen/Lagerpunkte beträgt genau drei. Die statische Bestimmtheit der Trittbrettlagerung ist daher besonders gut.

Besonders vorteilhaft ist es weiterhin, wenn alle Tragbereiche in Bezug auf eine Richtung quer zu einer Bewegungsrichtung des Trittbretts voneinander beabstandet sind. Jeder Tragbereich ist somit einer eigener Schiene zugeordnet. Die Sicherheit gegen Verkanten ist bei dieser Variante daher besonders groß. Denkbar ist aber auch, dass die Tragbereiche zwei Schienen oder auch nur einer Schiene zugeordnet sind.

Eine weitere vorteilhafte Variante der Einstiegshilfe ist gegeben, wenn ein erster und ein zweiter Tragbereich in einer Bewegungsrichtung des Trittbretts gesehen näher am Trittbrett liegen als der dritte Tragbereich, wobei der erste und der zweite Tragbereich in einer Bewegungsrichtung des Trittbretts gesehen gleich weit vom Trittbrett entfernt sind. Bei dieser Variante der Erfindung befinden sich also zwei Tragbereiche nahe am Trittbrett, insbesondere nahe an dessen Seitenkanten. Ein dritter Tragbereich befindet sich etwas weiter weg vom Trittbrett und ist bezogen auf die Breite des Trittbretts bevorzugt in dessen Mitte angeordnet. Dadurch ergeben sich weitgehend symmetrische Verhältnisse. Unter der Voraussetzung, dass das Trittbrett mittig belastet wird, was den Regelfall darstellt, und unter der Voraussetzung, dass der dritte Tragbereich in Bezug auf eine Bewegungsrichtung des Trittbretts vom ersten/zweiten Tragbereich gleich weit entfernt ist wie die Mitte des Trittbretts, wirken im ersten bis dritten Tragbereich gleich große Kräfte welche der Belastung auf das Trittbrett entsprechen. Im ersten und zweiten Tragbereich wirken die genannten Kräfte nach oben, wohingegen die Kraft im dritten Tragbereich nach unten wirkt. Dadurch können drei identische Wälzkörper/Gleitflächen eingesetzt werden, die aufgrund ihrer symmetrischen Belastung auch im Wesentlichen dieselbe Lebensdauer aufweisen. Je nachdem wie stark die Konstruktion von dieser Symmetrie abweicht, ergeben sich entsprechend andere Kräfteverhältnisse. Gegebenenfalls können dann auch unterschiedlich viele oder in von der Art her unterschiedliche Wälzkörper/Gleitflächen in den einzelnen Tragbereichen eingesetzt werden.

Günstig ist es, wenn als Wälzkörper einer oder mehrere aus der Gruppe Kugel, Rolle, Nadel und/oder Tonne vorgesehen ist/sind. Je nach Anwendungszweck können verschiedene Wälzkörper eingesetzt werden. Beispielsweise können Rollen und Tonnen vergleichsweise hohe Kräfte aufnehmen. Eine Tonnenlagerung kann darüber hinaus Winkelfehler gut ausgleichen. Ein Ausgleich von Winkelfehlern gelingt auch gut, wenn Kugeln als Wälzkörper eingesetzt werden. Kugeln eignen sich im Besonderen auch dann, wenn die Lauffläche nicht horizontal ausgestaltet sondern etwas schräg gestellt ist, um die Seitenführung des Trittbretts zu verbessern. Die resultierende Auflagekraft ist dann nicht vertikal sondern eben schräg ausgerichtet. Nadeln eignen sich schließlich insbesondere für Einbausituationen, bei denen eine niedrige Bauhöhe wichtig ist.

Günstig ist es, wenn die Einstiegshilfe einen Kraftsensor umfasst, welcher zum Messen der in einem Tragbereich wirkenden Auflagekraft eingerichtet ist. Auf diese Weise kann die auf das Trittbrett wirkende Belastung ermittelt werden. Beispielsweise können mit den so gewonnen Daten Rückschlüsse darauf gezogen werden, wer oder was sich gerade auf dem Trittbrett befindet. Liegt die Größe der Kraft beispielsweise über 500N, so kann mit hoher Wahrscheinlichkeit davon ausgegangen werden, dass sich eine erwachsene Person auf dem Trittbrett befindet. Ist die Belastung veränderlich, so befindet sich aller Wahrscheinlichkeit ein Lebewesen (Mensch oder Tier) auf dem Trittbrett, ist sie über längere Zeit statisch, so kann es sich mit einer gewissen Wahrscheinlichkeit auch lediglich um ein auf dem Trittbrett abgestelltes Gepäcksstück handeln.

Günstig ist es, wenn die Einstiegshilfe drei Kraftsensoren umfasst, welche zum Messen der in allen drei Tragbereichen wirkenden Auflagekräfte eingerichtet sind. Auf diese Weise kann einerseits die Größe der auf das Trittbrett (vertikal) einwirkenden Kraft sowie deren Angriffspunkt auf dem Trittbrett berechnet werden.

Vorteilhaft ist es zudem, wenn die Einstiegshilfe zwei Kraftsensoren umfasst, welche zum Messen der in zwei Tragbereichen wirkenden Auflagekräfte eingerichtet sind, insbesondere zum Messen der im ersten Tragbereich und im zweiten Tragbereich wirkenden Auflagerkräfte. Auf diese Weise kann einerseits die Größe der auf das Trittbrett (vertikal) einwirkenden Kraft sowie deren Angriffspunkt auf dem Trittbrett berechnet werden, sofern eine Koordinate desselben als bekannt vorausgesetzt oder angenommen wird. Beispielsweise kann der genannte Angriffspunkt in guter Näherung in Bezug auf die Tiefe des Trittbretts in deren Mitte angenommen werden.

Besonders vorteilhaft ist es darüber hinaus, wenn die Einstiegshilfe genau einen Kraftsensor umfasst, welcher zum Messen der in genau einem Tragbereich wirkenden Auflagekraft eingerichtet ist, insbesondere zum Messen der im dritten Tragbereich wirkenden Auflagekraft. Auf diese Weise kann die Größe der auf das Trittbrett wirkenden Kraft berechnet werden, wenn ihr Angriffspunkt als bekannt vorausgesetzt oder angenommen wird. Beispielsweise kann der genannte Angriffspunkt in guter Näherung im Zentrum des Trittbretts angenommen werden. Wird der Kraftsensor im dritten Tragbereich vorgesehen, so ist die Kenntnis der Koordinate des Angriffspunkts der Kraft in der Bewegungsrichtung des Trittbretts ausreichend. Beispielsweise kann der genannte Angriffspunkt in guter Näherung bezogen auf die Tiefe des Trittbretts in dessen Mitte angenommen werden. Selbstverständlich können auch andere Angriffspunkte bezogen auf die Tiefe des Trittbretts angenommen werden, beispielsweise dessen Vorderkante oder auch Hinterkante.

Vorteilhaft ist es, wenn die in einem Tragbereich vorgesehenen Wälzkörper/Gleitflächen in Bezug auf eine Richtung quer zu deren Auflagefläche zueinander beweglich, insbesondere federnd, gelagert sind. Auf diese Weise können Toleranzen der Einstiegshilfe in der Hinsicht ausgeglichen werden, dass die Wälzkörper/Gleitflächen eines Tragbereichs auch (alle) Kontakt zu einer Auflage- beziehungsweise Rollfläche haben und nicht "in der Luft hängen". Dadurch wird vermieden, dass die in einem Tragbereich wirkende Kraft nicht ungewollt nur von einem Teil der im Tragbereich befindlichen Wälzkörper/Gleitflächen aufgenommen wird und diese daher übermäßig belastet werden. Insbesondere verläuft die Bahn, entlang derer die Wälzkörper/Gleitflächen bewegt werden können, in einem Winkelbereich von +/- 45° ausgehend von der Normalen auf die genannte Auflagefläche. Im Speziellen kann die Bahn bogenförmig oder auch gerade (und insbesondere normal zur Auflagefläche) verlaufen.

Vorteilhaft ist es aber auch, wenn die in einem Tragbereich vorgesehenen Wälzkörper/Gleitflächen in Bezug auf eine Richtung quer zu deren Auflagefläche zueinander starr gelagert sind. Dadurch ergibt sich ein einfacher und wenig fehleranfälliger Aufbau der Einstiegshilfe.

Günstig ist es darüber hinaus, wenn die Tragbereiche in Bezug auf eine Richtung quer zu deren Auflagefläche zueinander derselben beweglich, insbesondere federnd, gelagert sind. Auf diese Weise wird beispielsweise erreicht, dass das Trittbrett auch trotz Toleranzen, welche zu ungewollten Höhenabweichungen der Tragbereiche führen, horizontal ausgerichtet werden kann. Auch hier die Bahn, entlang derer die Tragbereiche bewegt werden können, kann insbesondere in einem Winkelbereich von +/- 45° ausgehend von der Normalen auf die genannte Auflagefläche verlaufen. Im Speziellen kann die Bahn bogenförmig oder auch gerade (und insbesondere normal zur Auflagefläche) verlaufen.

Günstig ist es aber auch, wenn die Tragbereiche in Bezug auf eine Richtung quer zu deren Auflagefläche zueinander derselben starr gelagert sind. Dadurch ergibt sich wiederum ein einfacher und wenig fehleranfälliger Aufbau der Einstiegshilfe.

Besonders vorteilhaft ist es darüber hinaus, wenn wenigstens ein Wälzkörper / wenigstens eine Gleitfläche mit Hilfe einer Feder federnd gelagert ist und die Einstiegshilfe einen Anschlag umfasst, welcher nach einem vorgebbaren Federweg der Feder abseits des zumindest einen Wälzkörpers / der zumindest einen Gleitfläche und der Feder wirksam ist. Dadurch wird die Belastung des Wälzkörpers / der Gleitfläche auf jene Kraft begrenzt, welche durch die Federkonstante der Feder und dem Federweg, bei dem der Anschlag wirksam wird, definiert ist. Eine darüber hinausgehende Belastung des Wälzkörpers / der Gleitfläche wird dagegen vermieden, da diese von dem genannten Anschlag aufgenommen wird. Der "abseits des Wälzkörpers / der Gleitfläche und der Feder" angeordnete Anschlag ist daher unterschiedlich zu einem Anschlag, welcher auf den Wälzkörper / die Gleitfläche oder den Federmechanismus wirkt. Dabei wird zwar auch ein weiteres Einfedern des Wälzkörpers / der Gleitfläche verhindert, eine zusätzlich wirkende Kraft wird aber vom Wälzkörper / von der Gleitfläche selbst getragen.

Günstig ist es, wenn der Kraftsensor zum Messen der auf wenigstens einen Wälzkörper / wenigstens eine Gleitfläche wirkenden Auflagekraft eingerichtet ist. Bei dieser Variante wird die auf den zumindest einen Wälzkörper / die zumindest eine Gleitfläche wirkende Kraft direkt gemessen, beispielsweise mit einem Piezo-Drucksensor. Die erhaltenen Meßergebnisse sind daher besonders genau.

Günstig ist es weiterhin, wenn der Kraftsensor zum Messen der Verformung der Feder und/oder zum Messen des Federwegs eingerichtet ist. Bei dieser Variante wird die auf den zumindest einen Wälzkörper / die zumindest eine Gleitfläche wirkende Kraft über den Umweg der Verformungsmessung ermittelt. Unter Umständen ist eine solche Anordnung konstruktiv einfacher zu lösen, als die direkte Messung der genannten Kraft. Beispielsweise kann der Kraftsensor als Hallsensor ausgebildet sein, welcher die genannte Verformung der Feder und/oder den genannten Federweg misst. Prinzipiell kann der Einsatz eines solchen Hallsensors auch unabhängig von den Merkmalen des Patentanspruchs 1 vorteilhaft sein, das heißt auch bei einem Trittbrett, das mit mehr als drei Tragbereichen/Gleitbereichen gelagert ist.

Besonders vorteilhaft ist es, wenn der Anschlag über der zulässigen Belastung des zumindest einen Wälzkörpers / der zumindest einen Gleitfläche wirksam ist. Auf diese Weise wird vermieden, dass der zumindest eine Wälzkörper / die zumindest einen Gleitfläche bei hoher Belastung Schaden nimmt, da eine über die zulässige Belastung des zumindest einen Wälzkörpers / der zumindest einen Gleitfläche Kraft vom Anschlag aufgenommen wird.

Besonders vorteilhaft ist es weiterhin, wenn der Anschlag über dem Messbereich des Kraftsensors wirksam ist. Dadurch kann der Messbereich des Kraftsensors gut ausgenützt werden. Um Beschädigungen desselben zu vermeiden wird eine darüber hinausgehende Kraft vom Anschlag aufgenommen.

Darüber hinaus ist es auch von Vorteil, wenn der Anschlag bei unbelastetem Trittbrett unwirksam ist. Dadurch wird ein leichtes Ein- und Ausfahren des Trittbretts ermöglicht, da in der Führung desselben im Wesentlichen nur Rollreibung auftritt, eine vom Anschlag bewirkte Reibkraft aber vermieden wird.

Eine weitere besonders vorteilhafte Variante der Einstiegshilfe ist gegeben, wenn der Anschlag bei einer mehr als 100 N über die Gewichtskraft des Trittbretts hinausgehenden auf das Trittbrett wirkenden und mit der Gewichtskraft gleichgerichteten Kraft wirksam ist. Auf diese Weise wird eine gewisse Sicherheitsreserve vorgehen, sodass der Anschlag aufgrund von Toleranzen und Alterung beziehungsweise Setzen schon bei unbelastetem Trittbrett und somit immer wirksam ist. Bevorzugt ist der Anschlag bei einer mehr als 700 N über die Gewichtskraft des Trittbretts hinausgehenden auf das Trittbrett wirkenden und mit der Gewichtskraft gleichgerichteten Kraft wirksam. Dadurch wird der häufigste Belastungsfall einer Durchschnittsperson mit 70 kg Körpergewicht noch von den Wälzkörpern/Gleitflächen getragen, beziehungsweise können eine erwachsene Durchschnittsperson sowie leichtere Personen und Gegenstände auf dem Trittbrett mit Hilfe der Kraftmeßsensoren sicher detektiert werden.

Vorteilhaft ist es weiterhin, wenn der Anschlag an beziehungsweise mit einer Auflagefläche einen Haftreibungskoeffizienten von µ>0,5 aufweist oder eine lösbare formschlüssige Verbindung zwischen diesen vorgesehen wird. Dadurch wird die Bewegung der Trittstufe bei (übermäßiger) Belastung eher gehemmt oder sogar verhindert. Beispielsweise kann auf diese Weise gefährlichen Situationen vorgebeugt werden. Bei passender Abstimmung von Antriebskraft des Antriebs, Federkonstante, Federweg bis zum Wirksamwerden des Anschlags und Reibungskoeffizient kann zum Beispiel eine Bewegung einer Trittstufe, die von einer Person belastet wird, alleine dadurch verhindert werden, dass der Antrieb dafür zu schwach ist. Selbst bei einem Versagen einer eventuell vorhandenen Personendetektion, welche den Antrieb steuert, bewegt sich das Trittbrett dann nicht. Es bewegt sich nur dann, wenn es unbelastet oder nur schwach belastet ist. Dasselbe gilt, wenn zwischen dem Anschlag und seiner Auflagefläche in der Schiene eine lösbare formschlüssige Verbindung vorgesehen wird, beispielsweise indem der Anschlag und die Schiene mit einer Verzahnung versehen werden. Die Höhe der Verzahnung wird dabei vorzugsweise so gewählt, dass die Verzahnung durch eine Feder gelöst wird, wenn die Belastung unter einen bestimmten Schwellwert sinkt.

Vorteilhaft ist es schließlich, wenn der Anschlag an beziehungsweise mit einer Auflagefläche einen Haftreibungskoeffizienten von µ<0,5 (bevorzugt µ<0,2) aufweist. Dadurch wird die Bewegung der Trittstufe bei Belastung eher begünstigt. Beispielsweise kann bei passender Abstimmung von Antriebskraft des Antriebs, Federkonstante, Federweg bis zum Wirksamwerden des Anschlags und Reibungskoeffizient die Trittstufe auch dann eingefahren werden, wenn diese belastet ist. Auf diese Weise kann das Verkehrsmittel selbst dann seine Fahrt fortsetzen, wenn das Trittbrett zum Beispiel durch ein vergessenes Gepäcksstück belastet wird.

Zum besseren Verständnis der Erfindung wird diese anhand der nachfolgenden Figuren näher erläutert. Es zeigen:
- Fig. 1: eine schematisch dargestellte Einstiegshilfe;
- Fig. 2: ein in Fig. 1 eingesetztes Schiebeelement in Schrägansicht;
- Fig. 3: das Schiebeelement aus Fig. 2 in Seitenansicht;
- Fig. 4: ein Schiebeelement mit einem federnd gelagerten Gleitkörper;
- Fig. 5: ein Schiebeelement mit einer federnd gelagerten und linear verschiebbaren Rolle;
- Fig. 6: eine Anordnung, bei der zwei Wälzkörper auf einer Wippe angeordnet sind;
- Fig. 7: eine schematisch dargestellte Anordnung, bei der die Tragbereiche in lediglich zwei Schienen gelagert sind;
- Fig. 8: ähnlich wie Fig. 7, nur mit einer etwas anderen Anordnung der Tragbereiche;
- Fig. 9: eine schematisch dargestellte Anordnung, bei der die Tragbereiche in lediglich einer Schiene gelagert sind und
- Fig. 10: eine exemplarische Anordnung verschiedener Tragbereiche zur Erläuterung eines "Clusters".

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

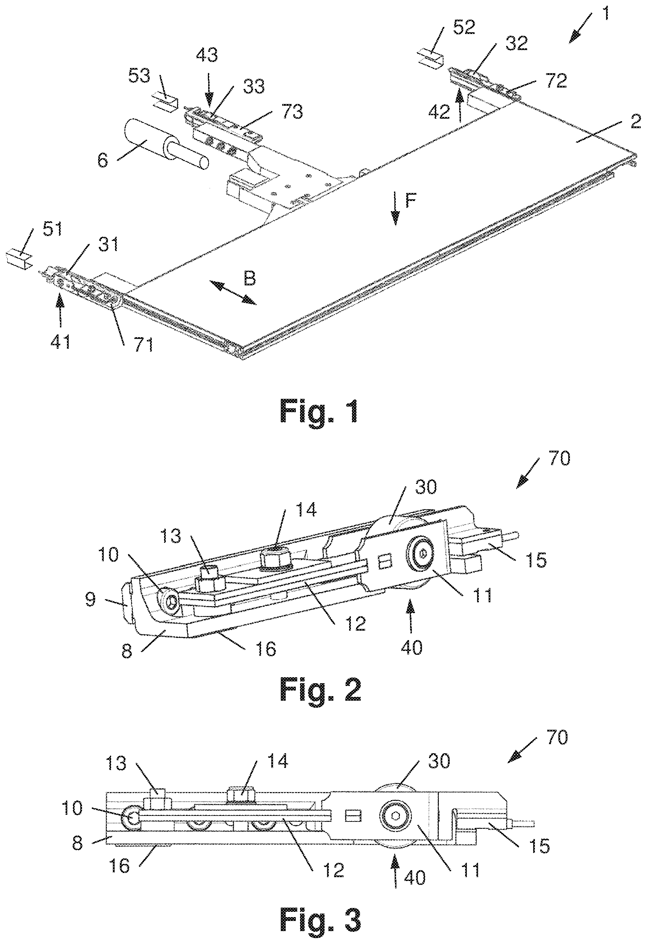

Fig. 1 zeigt eine Einstiegshilfe 1 für ein Schienenfahrzeug oder ein Kraftfahrzeug, umfassend ein Trittbrett 2, welches auf Wälzkörpern 31..33 verschiebbar gelagert ist. Die Wälzkörper 31..33 sind in diesem Beispiel in voneinander beabstandeten Tragbereichen 41..43 positioniert und laufen in angedeuteten Schienen 51..53. Weiterhin umfasst die Einstiegshilfe 1 einen mit dem Trittbrett 2 gekoppelten Antrieb 6, welcher in der Fig. 1 lediglich schematisch dargestellt ist und welcher zum Aus- und Einfahren des Trittbretts 2 eingerichtet ist. In dem in Fig. 1 dargestellten Beispiel sind die Wälzkörper 31..33 in speziellen Schiebeelementen 71..73 angeordnet.

Die Figuren 2 und 3 zeigen nun ein solches Schiebeelement 70 im Detail. Konkret zeigt die Fig. 2 das Schiebeelement 70 in Schrägansicht, die Fig. 3 in Seitenansicht. Das Schiebeelement 70 umfasst einen Grundkörper 8, an welchem Nutsteine 9 mit Schrauben 10 befestigt sind. Mit diesen Nutsteinen 9 beziehungsweise Schrauben 10 kann das Schiebeelement 70 am Trittbrett 2 befestigt werden. Die Rolle 30 ist in einem Rollenhalter 11 angeordnet, welcher über ein Federpaket 12 und einer Schraube 13 am Grundkörper 8 montiert ist. Weiterhin umfasst das Schiebeelement 70 eine Einstellschraube 14, einen optionalen Kraftmeßsensor 15 und einen optionalen Anschlag 16. Somit umfasst das Schiebeelement 70 respektive die Einstiegshilfe 1 in diesem Beispiel einen Wälzkörper 30 respektive einen Tragbereich 40, welcher mit Hilfe einer Feder 12 federnd gelagert ist, sowie einen Anschlag 16, welcher nach einem vorgebbaren Federweg der Feder 12 abseits des zumindest einen Wälzkörpers 30 und der der Feder 12 wirksam ist.

Die Funktion der Einstiegshilfe 1 ist nun wie folgt:

In der Grundstellung ragt der Wälzkörper 30, welcher hier als Rolle ausgebildet ist, über die Unterseite des Grundkörpers 8 und des Anschlags 16 hinaus. In der Grundstellung liegt das Schiebeelement 70 und damit das Trittbrett 2 auf den Wälzkörpern 30..33 auf und kann allein durch Überwindung der Rollreibung bewegt werden.

Durch die Feder 12 wird die Belastung des Wälzkörpers 30 auf jene Kraft begrenzt, welche durch die Federkonstante der Feder 12 und dem Federweg, bei dem der Anschlag 16 wirksam wird, definiert ist. Eine darüber hinausgehende Belastung des Wälzkörpers 30 wird dagegen vermieden, da bei steigender Belastung die Rolle 30 in den Fig. 2 und 3 zusehends nach oben gedrückt wird und in Folge der Anschlag 16 auf der in der Schiene 51..53 angeordneten Lauffläche zu liegen kommt. Eine weitere Belastung wird in Folge vom Anschlag 16 aufgenommen. Die Belastung der Rolle 30 ist aber ab diesem Zeitpunkt konstant. Vorteilhaft ist es in diesem Zusammenhang wenn der Anschlag 16 über der zulässigen Belastung des Wälzkörpers 30 wirksam ist, um den Wälzkörper 30 vor Beschädigung zu schützen. Die Kraft, ab welcher der Anschlag 16 wirksam wird, kann mit der Einstellschraube 14 eingestellt werden.

Mit dem Kraftsensor 15, welcher in diesem Beispiel zum Messen des Federwegs der Feder 12 ausgebildet ist, kann die auf die Rolle 30 wirkende Auflagekraft gemessen werden. Alternativ kann der Kraftsensor 15 auch zum Messen der Verformung der Feder 12 ausgebildet und beispielsweise mit Hilfe von Dehnmeßstreifen realisiert sein. Aber auch die direkte Messung der genannten Auflagekraft ist prinzipiell möglich. Beispielsweise kann dazu ein als Piezo-Drucksensor ausgebildeter Kraftsensor 15 im Bereich der Lagerung der Rolle 30 im Rollenhalter 11 angeordnet sein. Bei Verwendung eines Kraftsensors 15 ist es von Vorteil, wenn der Anschlag 16 über dem Messbereich des Kraftsensors 15 wirksam ist, weil auf diese Weise der Messbereich des Kraftsensors 15 gut ausgenützt werden kann, ohne Beschädigungen desselben aufgrund übermäßiger Belastung riskieren zu müssen. Eine über den Messbereich hinausgehende Kraft wird ja dann vom Anschlag 16 aufgenommen.

Mit Hilfe des Kraftsensors 15 kann die auf das Trittbrett 2 wirkende Belastung ermittelt werden. Beispielsweise können mit den so gewonnen Daten Rückschlüsse darauf gezogen werden wer oder was sich gerade auf dem Trittbrett 2 befindet. Liegt die Größe der Kraft F beispielsweise über 500N, so kann mit hoher Wahrscheinlichkeit davon ausgegangen werden, dass sich eine erwachsene Person auf dem Trittbrett 2 befindet. Ist die Belastung veränderlich, so befindet sich aller Wahrscheinlichkeit ein Lebewesen (Mensch oder Tier) auf dem Trittbrett 2, ist sie über längere Zeit statisch, so kann es sich mit einer gewissen Wahrscheinlichkeit auch lediglich um ein auf dem Trittbrett 2 abgestellte Gepäcksstück handeln.

Generell stehen für die Anordnung des Kraftsensors 15 oder mehrerer Kraftsensoren 15 mehrere Möglichkeiten zur Verfügung. Beispielsweise können alle Schiebelemente 71..73 in der Fig. 1 mit Kraftsensoren 15 ausgestattet sein, sodass die in allen drei Tragbereichen 41..43 wirkenden Auflagekräfte gemessen werden können. Auf diese Weise kann einerseits die Größe der auf das Trittbrett 2 einwirkenden Kraft F sowie deren Angriffspunkt auf dem Trittbrett 2 berechnet werden.

Denkbar ist auch, dass die Einstiegshilfe 1 lediglich zwei Kraftsensoren 15 umfasst, welche zum Messen der in zwei Tragbereichen 41..43 wirkenden Auflagekräfte eingerichtet sind. Besonders vorteilhaft ist es, wenn das erste und das zweite Schiebeelement 71 und 72 mit Kraftsensoren 15 ausgestattet sind und somit die im ersten Tragbereich 41 und im zweiten Tragbereich 42 wirkenden Auflagerkräfte gemessen werden können. Auf diese Weise kann einerseits die Größe der auf das Trittbrett 2 einwirkenden Kraft F sowie deren Angriffspunkt auf dem Trittbrett 2 berechnet werden, sofern eine Koordinate desselben als bekannt vorausgesetzt oder angenommen wird. Beispielsweise kann der genannte Angriffspunkt in guter Näherung in Bezug auf die Tiefe des Trittbretts 2 in deren Mitte angenommen werden.

Denkbar ist aber auch, dass die Einstiegshilfe 1 nur einen Kraftsensor 15 umfasst. Auf diese Weise kann die Größe der auf das Trittbrett 2 wirkenden Kraft F berechnet werden, wenn ihr Angriffspunkt als bekannt vorausgesetzt oder angenommen wird. Beispielsweise kann der genannte Angriffspunkt in guter Näherung im Zentrum des Trittbretts 2 angenommen werden. Wird der Kraftsensor 15 im dritten Schiebeelement 73 vorgesehen, sodass die im dritten Tragbereich 43 wirkende Auflagekraft gemessen werden kann, so ist die Kenntnis der Koordinate des Angriffspunkts der Kraft F in der Bewegungsrichtung B des Trittbretts 2 ausreichend. Beispielsweise kann der genannte Angriffspunkt in guter Näherung bezogen auf die Tiefe des Trittbretts 2 in dessen Mitte angenommen werden. Selbstverständlich können auch andere Angriffspunkte bezogen auf die Tiefe des Trittbretts 2 angenommen werden, beispielsweise dessen Vorderkante oder auch Hinterkante.

Die Wälzkörper 31..33 sind in diesem Beispiel in genau drei voneinander beabstandeten und im Dreieck angeordneten Tragbereichen 41..43 positioniert. Dadurch ist die Lagerung des Trittbretts 2 statisch bestimmt. Damit sind die auf die Wälzkörper 31..33 wirkenden Kräfte gut vorhersehbar, da ein Abheben der Wälzkörper 31..33 beziehungsweise der Anschläge 16 unmöglich ist, so wie es bei einer Führung vorkommen kann, welche mehr als drei Tragbereiche 31..33 aufweist. Zudem ist die Gefahr des Verkantens der Schiebeelemente 71..73 in den Schienen 51..53 deutlich reduziert.

In dem in Fig. 1 dargestellten Beispiel ist pro Tragbereich 41..43 genau ein Wälzkörper 31..33 vorgesehen, das heißt, die Anzahl der Wälzkörper 31..33 beträgt genau drei. Möglich ist aber auch, dass ein Tragbereich 41..43 mehr als einen Wälzkörper 31..33 aufweist. Beispielsweise können nebeneinander oder hintereinander angeordnete Rollen 31..33 vorgesehen sein. Vorteilhaft ist es dabei, wenn der Abstand zweier Tragbereiche 41..43 voneinander wenigstens fünfmal so groß ist wie deren maximale Ausdehnung. Dadurch ist die Lagerung des Trittbretts 2 auch dann im Wesentlichen statisch bestimmt.

Beim Einsatz mehrerer Wälzkörper 30..33 pro Tragbereich 40..43 ist es weiterhin von Vorteil, wenn die in einem Tragbereich 40..43 vorgesehenen Wälzkörper 30..33 in Bezug auf eine Richtung quer zu deren Auflagefläche zueinander beweglich, insbesondere federnd, gelagert sind. Auf diese Weise können Toleranzen der Einstiegshilfe in der Hinsicht ausgeglichen werden, dass alle Wälzkörper 30..33 eines Tragbereichs 40..43 Kontakt zu einer Auflagebeziehungsweise Rollfläche haben und nicht "in der Luft hängen". Dadurch wird vermieden, dass die in einem Tragbereich 40..43 wirkende Kraft nicht ungewollt nur von einem Teil der im Wälzbereich40..43 befindlichen Wälzkörper 30..33 aufgenommen wird und diese daher übermäßig belastet werden.

Selbstverständlich können die in einem Tragbereich 40..43 vorgesehenen Wälzkörper 30..33 in Bezug auf eine Richtung quer zu deren Auflagefläche zueinander starr gelagert sein, wodurch sich ein einfacher und wenig fehleranfälliger Aufbau der Einstiegshilfe 1 ergibt.

Im dem in der Fig. 1 dargestellten Beispiel sind alle Tragbereiche 41..43 in Bezug auf eine Richtung quer zu einer Bewegungsrichtung des Trittbretts 2 (siehe auch den Doppelpfeil B in der Fig. 1) voneinander beabstandet. Damit ist jedem Tragbereich 41..43 eine eigene Lauffläche respektive Schiene 51..53 zugeordnet. Die Sicherheit gegen Verkanten ist bei dieser Variante daher besonders groß. In der Fig. 1 sind die Schienen 51 und 53 sowie 52 und 53 zudem gleich beabstandet. Dies ist aber keineswegs zwingend, die Schienen 51 und 53 sowie 52 und 53 könnten auch unterschiedlich beabstandet sein.

Weiterhin liegen der erste und der zweite Tragbereich 41, 42 in einer Bewegungsrichtung des Trittbretts 2 gesehen näher am Trittbrett 2 als der dritte Tragbereich 43, wobei der erste und der zweite Tragbereich 41, 42 in einer Bewegungsrichtung des Trittbretts 2 gesehen gleich weit vom Trittbrett 2 entfernt sind. Dadurch ergeben sich weitgehend symmetrische Verhältnisse. Unter der Voraussetzung, dass der dritte Tragbereich 43 in Bezug auf die Bewegungsrichtung des Trittbretts 2 vom ersten/zweiten Tragbereich 41, 42 gleich weit entfernt ist wie der Angriffspunkt der Kraft F, wirken im ersten bis dritten Tragbereich 41..43 gleich große Kräfte welche der Belastung F auf das Trittbrett 2 entsprechen. Im ersten und zweiten Tragbereich 41, 42 wirken die genannten Kräfte nach oben, wohingegen die Kraft im dritten Tragbereich 43 nach unten wirkt. Dadurch können drei identische Wälzkörper 31..33 eingesetzt werden, die aufgrund ihrer symmetrischen Belastung auch im Wesentlichen dieselbe Lebensdauer aufweisen. Selbstverständlich ist diese Symmetrie für die Einstiegshilfe 1 nicht zwingend. Abweichende geometrische Verhältnisse sind natürlich uneingeschränkt möglich.

Im gezeigten Beispiel sind die Tragbereiche 40..43 respektive die Wälzkörper 30..33 in Bezug auf eine Richtung quer zu deren Auflagefläche zueinander beweglich, hier sogar federnd, gelagert. Grundsätzlich ist es aber auch denkbar, dass die Tragbereiche 40..43 respektive die Wälzkörper 30..33 in Bezug auf eine Richtung quer zu deren Auflagefläche zueinander starr gelagert sind. Dadurch ergibt sich ein einfacher und wenig fehleranfälliger Aufbau der Einstiegshilfe 1.

Generell kann der Wälzkörper 30..33 auch eine andere Form als eine Rolle aufweisen. Beispielsweise können diese als Kugel, Nadel und/oder Tonne ausgeführt sein. Beispielsweise können Rollen und Tonnen vergleichsweise hohe Kräfte aufnehmen. Eine Tonnenlagerung kann darüber hinaus Winkelfehler gut ausgleichen. Ein Ausgleich von Winkelfehlern gelingt auch gut, wenn Kugeln als Wälzkörper eingesetzt werden. Kugeln eignen sich im Besonderen auch dann, wenn die Lauffläche nicht horizontal ausgestaltet sondern etwas schräg gestellt ist, um die Seitenführung des Trittbretts 2 zu verbessern. Die resultierende Auflagekraft ist dann nicht vertikal sondern eben schräg ausgerichtet. Nadeln eignen sich schließlich insbesondere für Einbausituationen, bei denen eine niedrige Bauhöhe wichtig ist. Gegebenenfalls können dann auch unterschiedlich viele oder in von der Art her unterschiedliche Wälzkörper in den einzelnen Tragbereichen eingesetzt werden.

Wie erwähnt, ist in dem in den Figuren dargestellten Beispielen der Anschlag 16 bei unbelastetem Trittbrett 2 unwirksam. Dadurch wird ein leichtes Ein- uns Ausfahren des Trittbretts 2 ermöglicht, da zwischen den Rollen 30..33 und den Schienen 51..53 im Wesentlichen nur Rollreibung auftritt, eine vom Anschlag 16 bewirkte Reibkraft aber vermieden wird.

Von Vorteil ist es, wenn der Anschlag 16 bei einer mehr als 100 N über die Gewichtskraft des Trittbretts 2 hinausgehenden, auf das Trittbrett 2 wirkenden und mit der Gewichtskraft gleichgerichteten Kraft wirksam ist. Auf diese Weise wird eine gewisse Sicherheitsreserve vorgehen, sodass der Anschlag 16 aufgrund von Toleranzen und Alterung beziehungsweise Setzen nicht schon bei unbelastetem Trittbrett 2 und damit immer wirksam ist. Bevorzugt ist der Anschlag 16 bei einer mehr als 700 N über die Gewichtskraft des Trittbretts 2 hinausgehenden Kraft wirksam. Dadurch wird der häufigste Belastungsfall einer Durchschnittsperson mit 70 kg Körpergewicht noch von den Wälzkörpern 30..33 getragen, beziehungsweise können eine erwachsene Durchschnittsperson sowie leichtere Personen und Gegenstände auf dem Trittbrett 2 mit Hilfe der Kraftmeßsensoren 15 sicher detektiert werden.

Beispielsweise kann zwischen dem Anschlag 16 und seiner Auflagefläche in der Schiene 51..53 ein Haftreibungskoeffizienten von µ>0,5 oder eine lösbare formschlüssige Verbindung vorgesehen werden. Dadurch wird die Bewegung des Trittbretts 2 bei (übermäßiger) Belastung eher gehemmt oder sogar verhindert. Beispielsweise kann auf diese Weise gefährlichen Situationen vorgebeugt werden. Bei passender Abstimmung von Antriebskraft des Antriebs 6, Federkonstante, Federweg bis zum Wirksamwerden des Anschlags 16 und Reibungskoeffizient kann zum Beispiel eine Bewegung des Trittbretts 2, das von einer Person belastet wird, alleine dadurch verhindert werden, dass der Antrieb zu schwach dafür ist. Selbst bei einem Versagen einer eventuell vorhandenen Personendetektion, welche den Antrieb 6 steuert, bewegt sich das Trittbrett 2 dann nicht, sondern nur, wenn es unbelastet oder nur schwach belastet ist. Dasselbe gilt, wenn zwischen dem Anschlag 16 und seiner Auflagefläche in der Schiene 51..53 eine lösbare formschlüssige Verbindung vorgesehen wird, beispielsweise indem der Anschlag 16 und die Schiene 51..53 mit einer Verzahnung versehen werden. Die Höhe der Verzahnung wird dabei vorzugsweise so gewählt, dass die Verzahnung durch die Feder 12 gelöst wird, wenn die Belastung unter einen bestimmten Schwellwert sinkt. Selbstverständlich kann das Trittbrett 2 auch anders verriegelt werden, beispielsweise durch einen einrastenden Bolzen, welcher ein Verschieben des Verschiebeelements 70..53 in der Schiene 51..53 verhindert.

Zwischen dem Anschlag 16 und seiner Auflagefläche in der Schiene 51..53 kann aber beispielsweise auch ein Haftreibungskoeffizienten von µ<0,5 (bevorzugt µ<0,2) vorgesehen sein. Dadurch wird die Bewegung des Trittbretts 2 bei Belastung eher begünstigt. Beispielsweise kann bei passender Abstimmung von Antriebskraft des Antriebs 6, Federkonstante, Federweg bis zum Wirksamwerden des Anschlags 16 und Reibungskoeffizient das Trittbrett 2 auch dann eingefahren werden, wenn diese belastet ist.

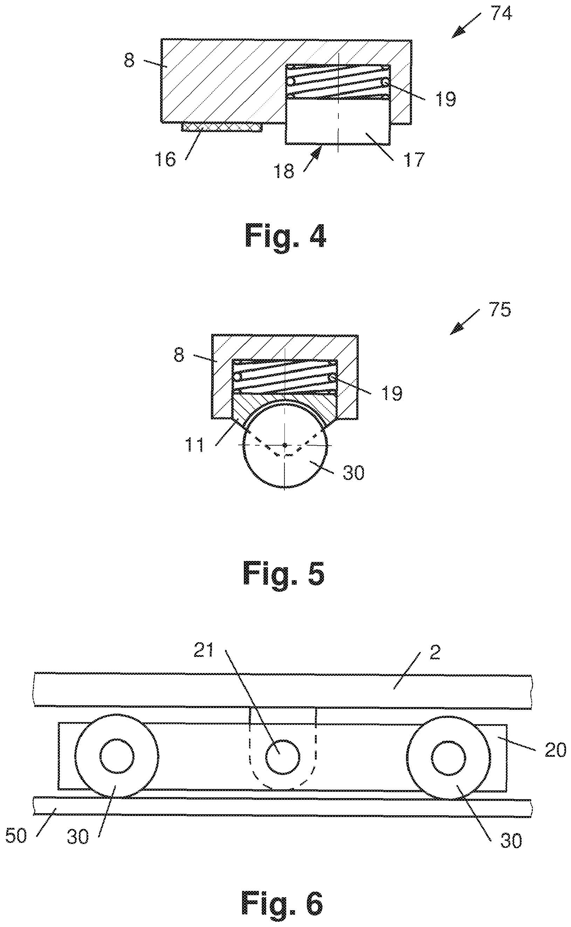

Fig. 4 zeigt eine Ausführungsform eines Schiebeelements 74, bei dem ein federnd gelagerter Gleitkörper 17 mit einer Gleitfläche 18 in einem Grundkörper 8 angeordnet ist. Steigt die auf die Gleitfläche 18 wirkende Kraft, so wird der Gleitkörper 17 zusehends gegen die Kraft der Spiralfeder 19 in den Grundkörper 8 hineingedrückt, bis dieser gleich weit vom Grundkörper 8 hervorsteht wie der Anschlag 16. Ab diesem Punkt wird jede weitere Belastung - ähnlich wie bei den in den Figuren 1 bis 3 dargestellten Schiebeelementen 70..73 - vom Anschlag 16 übernommen.

Fig. 5 zeigt eine Ausführungsform eines Schiebeelements 75, bei dem ein federnd gelagerter Rollenhalter 11 mit einer Rolle 30 in einem Grundkörper 8 angeordnet ist. Dadurch können die Tragbereiche 40..43 in Bezug auf eine Richtung quer zu deren Auflagefläche zueinander derselben beweglich ausgebildet sein. Darüber hinaus kann zusätzlich oder alternativ dazu vorgesehen sein, dass die in einem Tragbereich 40..43 vorgesehenen Wälzkörper 30..33 in Bezug auf eine Richtung quer zu deren Auflagefläche zueinander beweglich sind. Im Unterschied zu der in den Figuren 2 und 3 dargestellten Variante, bei welcher die Rolle 30 in einer bogenförmigen Bahn bewegt wird, ist die Rolle 30 in der in Fig. 5 dargestellten Variante linear verschiebbar gelagert. Selbstverständlich kann auch die in der Fig. 5 dargestellte Ausführungsvariante mit einem Anschlag 16 ausgestattet sein.

Die zu den Figuren 1 bis 3 offenbarte Lehre kann sinngemäß auch auf die in den Fig. 4 oder 5 dargestellten Ausführungsformen übertragen werden, insbesondere auch im Hinblick auf die Anwendung von Kraftsensoren und das Vorsehen bestimmter Reibwerte oder einer lösbaren formschlüssigen Verbindung für den Anschlag 16. Im Speziellen ist es von Vorteil, wenn der Reibkoeffizient zwischen der Gleitfläche 18 und ihrer Auflagefläche in der Schiene 51..53 kleiner ist als der Reibkoeffizient zwischen dem Anschlag 16 und seiner Auflagefläche in der Schiene 51..53, sofern der Anschlag 16 nicht überhaupt eine lösbare formschlüssige Verbindung mit der Schiene 51..53 bildet.

Fig. 6 zeigt eine Anordnung, bei der zwei Wälzkörper 30 auf einer Wippe 20 angeordnet sind. Dadurch kann einerseits eine Belastung auf mehrere Wälzkörper 30 aufgeteilt werden, andererseits kann aber auch gewährleistet werden, dass die Wälzkörper 30 in jedem Fall tragen. Über das Drehlager beziehungsweise den Lagerpunkt 21 der Wippe 20 kann im Wesentlichen nur eine Lagerkraft, jedoch kein Drehmoment übertragen werden. Die Lagerpunkte 21 der Wippen 20 sind dabei - ähnlich wie dies in der Fig. 1 für die Wälzkörper 31..33 dargestellt ist - in genau drei voneinander beabstandeten und im Dreieck angeordneten Tragbereichen 40..43 positioniert. Die Lagerung des Trittbretts 2 ist dabei selbst dann noch statisch im Wesentlichen bestimmt, wenn die Wälzkörper 30 selbst zwar keine Cluster bilden, jedoch die genannten Krafteinleitungs- oder Lagerpunkte 21 diese Eigenschaft aufweisen. Das in der Fig. 6 dargestellte Ausführungsbeispiel ist im Zusammenhang mit Wälzkörpern 30 dargestellt, selbstverständlich kann die gezeigte Wippe 20 auch im Zusammenhang mit Gleitkörpern 18 verwendet werden.

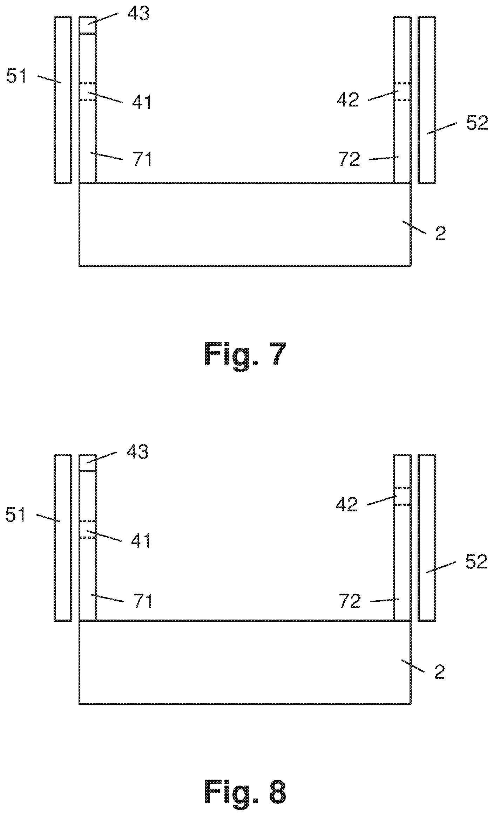

Fig. 7 zeigt eine schematisch dargestellte und beispielhafte Anordnung in Draufsicht, bei der die Tragbereiche 41..43 in lediglich zwei Schienen 51, 52 gelagert sind. Dabei sind die Tragbereiche 41 und 43 im linken Schiebeelement 71 angeordnet, das in der linken Schiene 51 gelagert ist, und der Tragbereich 42 ist im rechten Schiebeelement 72 angeordnet, das in der rechten Schiene 52 gelagert ist. (An dieser Stelle wird angemerkt, dass die Schienen 51 und 52 der besseren Darstellbarkeit halber seitlich verschoben und neben den Tragbereichen 41..43 gezeichnet sind. In der Realität sind die Tragbereiche 41..43 natürlich in den Schienen 51 und 52 geführt.) Die Tragbereiche 41 und 42 sind an der Unterseite, der Tragbereich 43 an der Oberseite der Schiebeelemente 71, 72 angeordnet.

Fig. 8 zeigt eine Anordnung, die der in der Fig. 7 dargestellten Anordnung sehr ähnlich ist. Im Unterschied dazu ist aber der Tragbereich 42 etwas nach hinten versetzt und befindet sich in Bezug auf die Schieberichtung in der Mitte der beiden Tragbereiche 41 und 43.

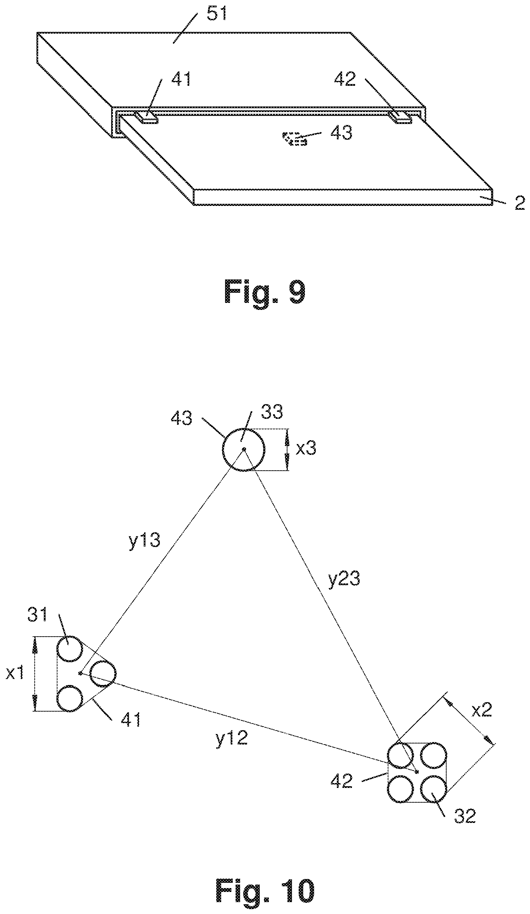

Fig. 9 zeigt eine schematisch dargestellte und beispielhafte Anordnung in Draufsicht, bei der die Tragbereiche 41..43 in lediglich einer Schiene 51 gelagert sind. Die Tragbereiche 41..43 sind dabei beispielhaft direkt auf dem Trittbrett 2 angeordnet, dass tiefer ausgeführt ist, als es die eigentliche Trittfläche erfordern würde. Der hintere Teil des Trittbretts 2 mit den Tragbereichen 41..43 ist dabei in der kastenförmig ausgeführten Schiene 51 geführt. In der Fig. 9 ist das Trittbrett der besseren Darstellbarkeit halber komplett aus der Schiene 51 herausgezogen dargestellt. In der Realität wird es dagegen maximal bis zum Tragbereich 43 herausgezogen. Das Trittbrett 2 selbst kann beispielsweise in einer Sandwich-Bauweise hergestellt sein, sodass eine ausreichende Stabilität bei geringem Gewicht erzielt werden kann.

In der Fig. 9 ist das Trittbrett 2 innerhalb der Schiene 51 geführt. Denkbar ist natürlich auch, dass die Schiene 51 innerhalb des Trittbretts 2 geführt ist. In der Fig. 9 kann demgemäß auch die Schiene 51 als Trittbrett 2 verwendet werden und umgekehrt. Insbesondere können dazu die Tragbereiche 41..43 auf der Innenseite der zum Trittbrett 2 gewordenen Schiene 51 angeordnet sein. Dies gilt auch für die anderen dargestellten Varianten, bei denen die Tragbereiche 41..43 ebenfalls wagenfest sein können.

Fig. 10 zeigt schließlich eine rein exemplarische Anordnung verschiedener Tragbereiche 41..43 im Dreieck, wobei der Tragbereich 41 drei im Dreieck angeordnete Wälzkörper 31 und der Tragbereich 42 vier im Viereck angeordnete Wälzkörper 32 aufweist. Im Tragbereich 33 ist ein einziger etwas größerer Wälzkörper 43 angeordnet. Der Tragbereich 33 ist daher mit dem Wälzkörper 33 deckungsgleich.

Die größte Ausdehnung des Tragbereichs 41 ist durch die Seitenlänge x1 des Dreiecks bestimmt, die des Tragbereichs 42 durch die Diagonale x2 und die des Tragbereichs 43 durch den Durchmesser x3. In diesem Beispiel weist der Tragbereich 41 die größte Ausdehnung auf, das heißt x1 > x2, x3. Vorteilhaft sind die Abstände y12, y13 und y23 zwischen den Tragbereichen 41..43 wenigstens fünfmal so groß ist wie deren maximale Ausdehnung. Dies bedeutet in dem konkreten Beispiel y12, y13, y23 ≥ 5·x1.

In diesem Beispiel sind alle Abstände y12, y13 und y23 größer als 5·x1. Dies ist zwar besonders vorteilhaft, allerdings ist auch möglich, dass die Abstände y12, y13 und y23 vorteilhaft jeweils wenigstens fünfmal so groß sind wie die maximale Ausdehnung der angrenzenden Tragbereichen 41..43. Das bedeutet konkret y12 ≥ 5·MAX(x1, x2), y13 ≥ 5·MAX(x1, x3) und y23 ≥ 5·MAX(x2, x3).

In der Fig. 10 sind die Abstände y12, y13 und y23 auf die (Flächen)schwerpunkte der Tragbereiche 41..43 bezogen. Denkbar ist beispielsweise aber auch, dass der Abstand zwischen zwei Tragbereichen 41..43 durch den Durchmesser jenes kleinsten Kreises bestimmt ist, der gerade noch zwischen zwei Tragbereiche 41..43 passt.

Wenn die obigen Bedingungen erfüllt sind, so ist die Anordnung besonders gut statisch bestimmt und die Tendenz zum Verklemmen ist nur gering. Die Wälzkörper 31..33 sind dabei in klar abgegrenzte "Cluster" gegliedert. Die offenbarte Lehre ist zudem gleichermaßen auf die Lagerpunkte 21 von Wippen 20 anwendbar.

Die Ausführungsbeispiele zeigen mögliche Ausführungsvarianten einer erfindungsgemäßen Einstiegshilfe 1 respektive eines erfindungsgemäßen Schiebeelements 70..75, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die dargestellte Einstiegshilfe 1 beziehungsweise das dargestellte Schiebeelement 70..75 in der Realität auch mehr oder weniger Bestandteile als dargestellt umfassen können. Im Speziellen kann das Trittbrett 2 anders als in den Figuren dargestellt auch auf fixen (also nicht federnd gelagerten) Wälzkörpern 30..33 und/oder Gleitflächen 18 gelagert sein. Ein Anschlag 16 kann in diesem Fall entfallen. Denkbar sind weiterhin Mischformen der dargestellten Ausführungsformen. So können für die Lagerung eines Trittbretts 2 beispielsweise ein Wälzkörper 30..33 und ein Gleitkörper 17 gemischt verwendet werden. Dasselbe gilt für Wippen 20. Darüber hinaus können auch federnd gelagerte Wälzkörper 30..33 oder Gleitkörper 17 mit fix gelagerten Wälzkörpern 30..33 oder Gleitkörpern 17 gemeinsam verwendet werden.

Der Ordnung halber sei abschließend darauf hingewiesen, dass die Einstiegshilfe 1 und das Schiebeelement 70..75, sowie deren Bestandteile zum besseren Verständnis ihres Aufbaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Einstiegshilfe
- 2: Trittbrett
- 30..33: Wälzkörper (Rolle)
- 40..43: Tragbereich
- 50..53: Schiene
- 6: Antrieb
- 71..75: Schiebeelement
- 8: Grundkörper
- 9: Nutstein
- 10: Befestigungsschraube
- 11: Rollenhalter
- 12: Federpaket
- 13: Schraube
- 14: Einstellschraube
- 15: Kraftmeßsensor
- 16: Anschlag
- 17: Gleitkörper
- 18: Gleitfläche
- 19: Spiralfeder
- 20: Wippe
- 21: Lagerpunkt Wippe
- B: Bewegungsrichtung
- F: Kraft
- x1..x3: Ausdehnung Tragbereich
- y12..y23: Abstand zwischen Tragbereichen

## Patentansprüche

1. Einstiegshilfe (1) für ein Schienenfahrzeug oder ein Kraftfahrzeug, umfassend
- ein Trittbrett (2), welches auf Wälzkörpern (30..33) und/oder Gleitflächen (18) verschiebbar gelagert ist, und
- einen mit dem Trittbrett (2) gekoppelten Antrieb (6), welcher zum Aus- und Einfahren des Trittbretts (2) eingerichtet ist,
**dadurch gekennzeichnet, dass**
die Wälzkörper (30..33) und/oder Gleitflächen (18)
a) in genau drei voneinander beabstandeten und im Dreieck angeordneten Tragbereichen (40..43) positioniert sind oder
b) auf mehreren Wippen (20) angeordnet sind und Lagerpunkte (21) der Wippen (20) in genau drei voneinander beabstandeten und im Dreieck angeordneten Tragbereichen (40..43) positioniert sind.

2. Einstiegshilfe (1) nach Anspruch 1, **dadurch gekennzeichnet, dass**
- ein Tragbereich (40..43) eine größte Ausdehnung (x1, x2, x3) aufweist, welche dem größtmöglichen Abstand zwischen zwei auf einem Rand des Tragbereichs (40..43) angeordneten Punkten entspricht, und
- der Abstand (y1, y2, y3) zweier Tragbereiche (40..43) voneinander wenigstens fünfmal so groß ist wie deren maximale Ausdehnung, welche dem Maximum der größten Ausdehnungen (k1, x2, x3) der genannten Tragbereiche (40..43) entspricht.

3. Einstiegshilfe (1) nach Anspruch 1 oder 2, **dadurch gekennzeichnet, dass** pro Tragbereich (40..43) genau ein Wälzkörper (30..33) oder eine Gleitfläche (18) oder ein Lagerpunkt (21) vorgesehen ist.

4. Einstiegshilfe (1) nach einem der Ansprüche 1 bis 3, **dadurch gekennzeichnet, dass** alle Tragbereiche (40..43) in Bezug auf eine Richtung quer zu einer Bewegungsrichtung (B) des Trittbretts (2) voneinander beabstandet sind.

5. Einstiegshilfe (1) nach einem der Ansprüche 1 bis 4, **dadurch gekennzeichnet, dass**
- das Trittbrett (2) eine quer zur Bewegungsrichtung (B) des Trittbretts (2) ausgerichtete Vorderkante aufweist sowie eine quer zur genannten Bewegungsrichtung (B) ausgerichtete Hinterkante, welche dem Antrieb (6) näher liegt als die besagte Vorderkannte,
- ein erster und ein zweiter Tragbereich (41, 42) in der genannten Bewegungsrichtung (B) des Trittbretts (2) gesehen näher an der genannten Vorderkante liegen als der dritte Tragbereich (43) und
- der erste und der zweite Tragbereich (41, 42) in einer Bewegungsrichtung (B) des Trittbretts (2) gesehen gleich weit von der Vorderkante entfernt sind.

6. Einstiegshilfe (1) nach einem der Ansprüche 1 bis 5, **gekennzeichnet durch** einen Kraftsensor (15), welcher zum Messen der in einem Tragbereich (40..43) wirkenden Auflagekraft eingerichtet ist.

7. Einstiegshilfe (1) nach Anspruch 6, **gekennzeichnet durch** drei Kraftsensoren (15), welche zum Messen der in allen drei Tragbereichen (40..43) wirkenden Auflagekräfte eingerichtet sind.

8. Einstiegshilfe (1) nach Anspruch 6, **gekennzeichnet durch** zwei Kraftsensoren (15), welche zum Messen der in zwei Tragbereich (40..43) wirkenden Auflagekräfte eingerichtet sind.

9. Einstiegshilfe (1) nach Anspruch 6, **gekennzeichnet durch** genau einen Kraftsensor (15), welcher zum Messen der in genau einem Tragbereich (40..43) wirkenden Auflagekraft eingerichtet ist.

10. Einstiegshilfe (1) nach einem der Ansprüche 1 bis 9, **dadurch gekennzeichnet, dass** die Tragbereiche (40..43) in Bezug auf eine Richtung quer zu deren Auflagefläche zueinander beweglich sind.

## Claims

1. Entry aid (1) for a rail vehicle or a motor vehicle, comprising
- a footboard (2) which is mounted displaceably on rolling bodies (30..33) and/or sliding surfaces (18), and
- a drive (6) which is coupled to the footboard (2) and is designed for extending and retracting the footboard (2),
**characterised in that**
the rolling bodies (30..33) and/or sliding surfaces (18)
a) are positioned in precisely three support regions (40..43) which are spaced apart from one another and are arranged in a triangle, or
b) are arranged on a plurality of rockers (20), and bearing points (21) of the rockers (20) are positioned in precisely three support regions (40..43) which are spaced apart from one another and are arranged in a triangle.

2. Entry aid (1) according to claim 1, **characterised in that**
- a support region (40..43) has a greatest extension (x1, x2, x3) which corresponds to the greatest possible distance between two points located on an edge of the support region (40..43), and
- the distance (y1, y2, y3) of two support regions (40..43) from each other is at least five times as large as the maximum extension thereof, which corresponds to the maximum of the greatest extensions (x1, x2, x3) of said support regions (40..43).

3. Entry aid (1) according to claim 1 or 2, **characterised in that** precisely one rolling body (30..33) or one sliding surface (18) or one bearing point (21) is provided per support region (40..43).

4. Entry aid (1) according to any of claims 1 to 3, **characterised in that** all of the support regions (40..43) are spaced apart from one another with respect to a direction which is transverse with respect to a direction of movement (B) of the footboard (2).

5. Entry aid (1) according to any of claims 1 to 4, **characterised in that**
- the footboard (2) has a front edge oriented transversely with respect to the direction of movement (B) of the footboard (2) and a rear edge which is oriented transversely with respect to said direction of movement (B) and lies closer to the drive (6) than said front edge,
- a first and a second support region (41, 42) lie closer to said front edge than the third support region (43), as seen in said direction of movement (B) of the footboard (2), and
- the first and the second support region (41, 42) are at an equal distance from the front edge, as seen in a direction of movement (B) of the footboard (2).

6. Entry aid (1) according to any of claims 1 to 5, **characterised by** a force sensor (15) which is designed for measuring the bearing force acting in a support region (40..43).

7. Entry aid (1) according to claim 6, **characterised by** three force sensors (15) which are designed for measuring the bearing forces acting in all three support regions (40..43).

8. Entry aid (1) according to claim 6, **characterised by** two force sensors (15) which are designed for measuring the bearing forces acting in two support regions (40..43).

9. Entry aid (1) according to claim 6, **characterised by** precisely one force sensor (15) which is designed for measuring the bearing force acting in precisely one support region (40..43).

10. Entry aid (1) according to any of claims 1 to 9, **characterised in that** the support regions (40..43) are movable with respect to one another with respect to a direction which is transverse with respect to the bearing surface thereof.

## Revendications

1. Marchepied (1) de véhicule ferroviaire ou de véhicule automobile, comprenant
- une palette (2) montée coulissante sur des roulements (30..33) et/ou des surfaces (18) de glissement et
- un entraînement (6) qui est couplé à la palette (2) et qui est conçu pour faire sortir et faire rentrer la palette (2),
**caractérisé en ce que**
les roulements (30..33) et/ou les surfaces (18) de glissement
a) sont placés dans exactement trois zones (40..43) de support, à distance les unes des autres et disposées en triangle, ou
b) sont disposés sur plusieurs bascules (20) et des points (21) de support des bascules (20) sont placés dans exactement trois zones de support, à distance les unes des autres et disposées en triangle.

2. Marchepied (1) suivant la revendication 1, **caractérisé en ce que**
- une zone (40..43) de support a une étendue (x1, x2, x3) la plus grande qui correspond à la distance la plus grande possible entre deux points disposés sur un bord de la zone (40..43) de support et
- la distance (y1, y2, y3) entre deux zones (40..43) de support est au moins cinq fois aussi grande que son étendue maximum, qui correspond au maximum des étendues (x1, x2, x3) les plus grandes desdites zones (40..43) de support.

3. Marchepied (1) suivant les revendications 1 ou 2, **caractérisé en ce qu'**il est prévu par zone (40..43) de support exactement un roulement (30..33) ou une surface (18) de glissement ou un point (21) de support.

4. Marchepied (1) suivant l'une des revendications 1 à 3, **caractérisé en ce que** toutes les zones (40..43) de support sont, par rapport à une direction transversalement à une direction (B) de déplacement de la palette (2), à distance les unes des autres.

5. Marchepied (1) suivant l'une des revendications 1 à 4, **caractérisé en ce que**
- la palette (2) a un bord avant dirigé transversalement à la direction (B) de déplacement de la palette (2) ainsi qu'un bord arrière dirigé transversalement à ladite direction (B) de déplacement, bord arrière qui est plus proche de l'entraînement (6) que le bord avant,
- une première et une deuxième zones (41, 42) de support sont, considérées dans ladite direction (B) de déplacement de la palette (2), plus près du bord avant que ne l'est la troisième zone (43) de support et
- la première et la deuxième zones (41, 42) de support sont considérées dans une direction (B) de déplacement de la palette (2), éloignées pareillement du bord avant.

6. Marchepied (1) suivant l'une des revendications 1 à 5, **caractérisé par** un capteur (15) de force conçu pour mesurer la force d'application s'appliquant dans une zone (40..43) de support.

7. Marchepied (1) suivant la revendication 6, **caractérisé par** trois capteurs (15) de force, qui sont conçus pour mesurer les forces d'application s'appliquant dans toutes les trois zones (40..43) de support.

8. Marchepied (1) suivant la revendication 6, **caractérisé par** deux capteurs (15) de force, qui sont conçus pour mesurer les forces d'application s'appliquant dans deux zones (40..43) de support.

9. Marchepied (1) suivant la revendication 6, **caractérisé par** exactement un capteur (15) de force, qui est conçu pour mesurer la force d'application s'appliquant dans exactement une zone (40..43) de support.

10. Marchepied (1) suivant l'une des revendications 1 à 9, **caractérisé en ce que** les zones (40..43) de support sont mobiles les unes par rapport aux autres dans une direction transversalement à leur surface d'application.
